# EUROPÄISCHE PATENTSCHRIFT

(11) **EP 2 249 054 B1**
(45) Veröffentlichungstag und Bekanntmachung des Hinweises auf die Patenterteilung: **02.05.2012**
(21) Anmeldenummer: 10162252.0
(22) Anmeldetag: 07.05.2010
(51) Int. Cl.: F16D 13/58

(54) **Druckplattenbaugruppe für eine Reibungskupplung**
Pressure plate assembly for a friction clutch
Assemblage de plaque de pression pour un embrayage à friction

(30) Priorität: 07.05.2009 DE 102009020289
(43) Veröffentlichungstag der Anmeldung: 10.11.2010
(73) Patentinhaber: ZF Friedrichshafen AG, 88038 Friedrichshafen (DE)
(72) Erfinder: Joa, Dominik, 97450 Heugrumbach (DE); Link, Achim, 97422 Schweinfurt (DE); Knauer, Wolfgang, 97486 Königsberg (DE); Michalke, Oliver, 97421 Schweinfurt (DE); Röpke, Helmut, 97525 Schwebheim (DE); Zink, Georg, 97447 Gerolzhofen (DE); Vogt, Sebastian, 97616 Bad Neustadt (DE)

(56) Entgegenhaltungen:
- DE-A1- 4 132 349
- DE-A1- 4 440 411
- FR-A1- 2 250 919
- GB-A- 2 305 698
- US-A1- 2004 050 644
- US-B1- 6 273 229

## Beschreibung

Die vorliegende Erfindung betrifft eine Druckplattenbaugruppe für eine Reibungskupplung, umfassend ein Gehäuse und eine mit dem Gehäuse um eine Drehachse drehbare und bezüglich diesem axial verlagerbare Anpressplatte, einen bezüglich des Gehäuses und der Anpressplatte abgestützten Kraftspeicher, welcher zur Durchführung von Betätigungsvorgängen bezüglich des Gehäuses bewegbar ist und durch welchen die Anpressplatte in einer Einrückrichtung belastbar ist.

Aus der DE 195 47 559 A1 ist eine Reibungskupplung mit einer Druckplattenbaugruppe bekannt, bei welcher dem als Membranfeder ausgebildeten Kraftspeicher eine ebenfalls als Membran- oder Tellerfeder ausgebildete Kompensationsfeder zugeordnet ist. Der Kraftspeicher ist in die Druckplattenbaugruppe so eingebaut, dass er die Anpressplatte in Richtung Einrücken belastet. Bei Durchführung eines Ausrück-Betätigungsvorgangs wird im Falle einer gedrückten Kupplung radial innen auf die Federzungen der als Kraftspeicher eingesetzten Membranfeder gedrückt, dieser Bereich also in Richtung Anpressplatte belastet. Dabei verschwenkt der Kraftspeicher mit seinem radial äußeren und die Anpressplatte belastenden Bereich in Richtung von der Anpressplatte weg, so dass die auf die Anpressplatte ausgeübte Belastung gemindert wird.

Die als Kompensationsfeder vorgesehene Membran- oder Tellerfeder ist in ihrem radial äußeren Bereich bezüglich des Gehäuses der Druckplattenbaugruppe und in ihrem radial inneren Bereich bezüglich des Kraftspeichers abgestützt. Die Kompensationsfeder belastet also den Kraftspeicher in Richtung Ausrücken und kompensiert somit dessen auf die Anpressplatte ausgeübte Belastung teilweise. Insbesondere kann dabei vorgesehen sein, dass in der Einrückpositionierung des Kraftspeichers die durch die Kompensationsfeder ausgeübte kompensierende Belastung vergleichsweise gering ist, so dass durch den Kraftspeicher eine durch die Wirkung der Kompensationsfeder im Wesentlichen nicht beeinträchtigte oder geminderte Einrückkraft auf die Anpressplatte ausgeübt wird. Mit der im Verlaufe eines Ausrück-Betätigungsvorgangs auftretenden Bewegung des Kraftspeichers bezüglich des Gehäuses findet eine entsprechende Bewegung der Kompensationsfeder statt, die dazu führen kann, dass die von der Kompensationsfeder auf dem Kraftspeicher ausgeübte und diesen in Richtung Ausrücken belastende Kraft zunimmt. Die sich somit ergebende resultierende Gesamtkraft, die durch ein Betätigungssystem zum Ausrücken erforderlich ist, ist somit im Vergleich zu einer Druckplattenbaugruppe ohne Kompensationsfeder deutlich geringer

Die DE 103 22 783 A1 offenbart eine Reibungskupplung mit einer Druckplattenbaugruppe, bei welcher die Anpressplatte durch den Kraftspeicher in Richtung Einrücken belastet wird. Es ist zusätzlich eine Reibungsdämpfungseinrichtung vorgesehen, welche auf die Anpressplatte einwirkende Reibungsfedern umfasst. Dies hat zur Folge, dass bei Durchführung von Betätigungsvorgängen die Anpressplatte sowohl beim Ausrücken, als auch beim Einrücken sich entgegen der durch die Reibungsdämpfungseinrichtung generierten Reibkraft bewegt werden muss. Das Vorsehen dieser zusätzlichen Reibkraft bewirkt, dass Schwingungsanregungen der Anpressplatte, die durch axiale Schwingungen und Taumelbewegungen des Schwungrads ausgelöst werden können, gedämpft werden bzw. deren Entstehung vollständig unterdrückt wird.

Es ist die Aufgabe der vorliegenden Erfindung, eine Druckplattenbaugruppe für eine Reibungskupplung vorzusehen, welche bei Vermeidung von Schwingungsanregungen ein verbessertes Betätigungsverhalten aufweist.

Erfindungsgemäß wird diese Aufgabe gelöst durch eine Druckplattenbaugruppe für eine Reibungskupplung, umfassend ein Gehäuse und eine mit dem Gehäuse um eine Drehachse drehbare und bezüglich diesem axial verlagerbare Anpressplatte, einen bezüglich des Gehäuses und der Anpressplatte abgestützten Kraftspeicher, welcher zur Durchführung von Betätigungsvorgängen bezüglich des Gehäuses bewegbar ist und durch welchen die Anpressplatte in einer Einrückrichtung belastbar ist, wenigstens eine Kompensationsdämpfungsfeder zum teilweisen Kompensieren einer durch den Kraftspeicher auf die Anpressplatte ausübbaren Einrückkraft, wobei die wenigstens eine Kompensationsdämpfungsfeder bezüglich des Kraftspeichers und bezüglich des Gehäuses abgestützt ist und bei Durchführung eines Betätigungsvorgangs bezüglich einer die Kompensationsdämpfungsfeder abstützenden Komponente reibend bewegbar ist.

Dabei ist weiter vorgesehen, dass ein bei einem Einrück-Betätigungsvorgang auftretender erster Reibwiderstand sich von einem bei einem Ausrück-Betätigungsvorgang auftretenden zweiten Reibwiderstand unterscheidet.

Dadurch, dass bei dem erfindungsgemäßen Aufbau die Reibcharakteristik für Einrücken und Ausrücken asymmetrisch ist, wird die durch die Kompensationsdämpfungsfeder eingeführte Verschiebung der Federkennlinie, die bei Einrücken und Ausrücken grundsätzlich zu einer Hysteresewirkung führt, verschoben. Es wird somit möglich, die Betätigungscharakteristik, also insbesondere die zum Betätigen erforderliche Ausrückkraft, so zu beeinflussen, dass beispielsweise bei im Wesentlichen nicht beeinträchtigter Einrückkraft im vollkommen eingekuppeltem Zustand durch die bei Durchführung von Ausrück-Betätigungsvorgängen zusätzlich auch auftretende Reibkraft kein übermäßiger Anstieg der Betätigungskraft auftritt, gleichwohl jedoch die Reibwirkung nutzbar ist, um das Auftreten von Schwingungsanregungen zu vermeiden.

Hierzu kann es insbesondere vorteilhaft sein, wenn der erste Reibwiderstand größer als der zweite Reibwiderstand ist. Dies führt zu einer Verschiebung der durch die Reibwirkung generierten Hysterese nach unten.

Der Aufbau der Druckplattenbaugruppe kann beispielsweise derart sein, dass wenigstens eine Kompensationsdämpfungsfeder an dem Gehäuse oder einer sich bei Durchführung eines Betätigungsvorgangs im Wesentlichen nicht bezüglich des Gehäuses verlagernden Komponente wenigstens gegen radiale Bewegung festgelegt ist und an dem Kraftspeicher oder einer sich bei Durchführung eines Betätigungsvorgangs im Wesentlichen nicht bezüglich des Kraftspeichers verlagernden Komponente reibend bewegbar ist.

Bei einer weiteren Ausgestaltungsform kann vorgesehen sein, dass wenigstens eine Kompensationsdämpfungsfeder an dem Kraftspeicher oder einer sich bei Durchführung eines Betätigungsvorgangs im Wesentlichen nicht bezüglich des Kraftspeichers verlagernden Komponente wenigstens gegen Radialbewegung festgelegt ist und an dem Gehäuse oder einer sich bei Durchführung eines Betätigungsvorgangs im Wesentlichen nicht bezüglich des Gehäuses verlagernden Komponente reibend bewegbar ist.

Um den Reibeffekt zwischen der wenigstens einen Kompensationsdämpfungsfeder und der diese stützenden Komponente effizient nutzen zu können, wird vorgeschlagen, dass die wenigstens eine Kompensationsdämpfungsfeder bei einem Ausrück-Betätigungsvorgang mit einem Reibbereich derselben bezogen auf einen Befestigungsbereich derselben ziehend entlang eines Gegenreibbereichs bewegbar ist und bei Durchführung eines Einrück-Betätigungsvorgangs drückend entlang des Gegenreibbereichs bewegbar ist. Auch dadurch ist es, je nach konstruktiver Auslegung der wenigstens einen Kompensationsdämpfungsfeder, möglich, bereits eine Verschiebung des Hystereseeffekts zu bewirken.

Weiter kann vorgesehen sein, dass einem Reibbereich der wenigstens einen Kompensationsdämpfungsfeder ein Gegenreibbereich an der in Reibwechselwirkung mit dieser bringbaren Komponente zugeordnet ist und dass Reibbereich und Gegenreibbereich bei Durchführung eines Betätigungsvorgangs eine Relativbewegung, vorzugsweise Relativ-Radialbewegung, bezüglich einander durchführen.

Wenn bei dieser Ausgestaltung der Gegenreibbereich axial angestellt ist, bedeutet dies, dass je nach Richtung der axialen Anstellung beim Einkuppeln oder Auskuppeln einmal gegen die axiale Anstellung und einmal mit der axialen Anstellung gearbeitet wird, wodurch eine sehr effiziente Verschiebung der Hysterese bezüglich eine Grundfederkennlinie erreichbar ist.

Dabei kann beispielsweise vorgesehen sein, dass der Gegenreibbereich in Richtung auf den Reibbereich der wenigstens einen Kompensationsdämpfungsfeder zu axial angestellt ist. Diese Ausgestaltung führt vor allem dann zu einem besonders komfortablen Betätigungsverhalten, wenn weiter vorgesehen ist, dass der Kraftspeicher in seinem radial äußeren Bereich die Anpressplatte beaufschlagt, in seinem radial inneren Bereich durch eine Betätigungsanordnung zur Durchführung von Betätigungsvorgängen beaufschlagbar ist und radial zwischen dem radial äußeren Bereich und dem radial inneren Bereich bezüglich des Gehäuses abgestützt ist, grundsätzlich also die Druckplattenbaugruppe für eine so genannte gedrückte Kupplung ausgebildet ist.

Bei einer alternativen Ausgestaltung kann vorgesehen sein, dass der Kraftspeicher in seinem radial äußeren Bereich bezüglich des Gehäuses abgestützt ist, in seinem radial inneren Bereich durch eine Betätigungsanordnung zur Durchführung von Betätigungsvorgängen beaufschlagbar ist und radial zwischen dem radial äußeren Bereich und dem radial inneren Bereich die Anpressplatte beaufschlagt. Hier ist also die Druckplattenbaugruppe grundsätzlich für eine so genannte gezogene Kupplung ausgebildet. Um auch dabei eine Verschiebung der Hysterese nach unten zu bewirken, kann weiter vorgesehen sein, dass der Gegenreibbereich in Richtung von dem Reibbereich der wenigstens einen Kompensationsdämpfungsfeder weg axial angestellt ist.

Aufgrund des in Kupplungen allgemein sehr beschränkt zur Verfügung stehenden Bauraums ist es vorteilhaft, wenn die wenigstens eine Kompensationsdämpfungsfeder im Wesentlichen an einer von der Anpressplatte abgewandten axialen Seite des Kraftspeichers angeordnet ist.

Wenigstens eine Kompensationsdämpfungsfeder kann als Tellerfeder oder Membranfeder ausgebildet sein.

Die vorliegende Erfindung betrifft ferne eine Reibungskupplung mit einer erfindungsgemäß aufgebauten Druckplattenbaugruppe.

Die Erfindung wird nachfolgend mit Bezug auf die beiliegenden Figuren detailliert beschrieben. Es zeigt:
- Fig. 1: eine Teil-Längsschnittansicht einer Druckplattenbaugruppe;
- Fig. 2: eine Federkennlinie einer Druckplattenbaugruppe mit symmetrischer Hystereseverschiebung;
- Fig. 3: eine Federkennlinie einer Druckplattenbaugruppe mit asymmetrischer Hystereseverschiebung;
- Fig. 4: eine der Fig. 1 entsprechende Darstellung einer alternativen Ausgestaltungsart einer Druckplattenbaugruppe;
- Fig. 5: eine der Fig. 1 entsprechende Darstellung einer alternativen Ausgestaltungsart einer Druckplattenbaugruppe;
- Fig. 6: eine prinzipartige Darstellung einer Druckplattenbaugruppe für eine gezogene Kupplung.
- Fig. 7: eine der Fig. 1 entsprechende Darstellung einer alternativen Ausgestaltungsart einer Druckplattenbaugruppe;

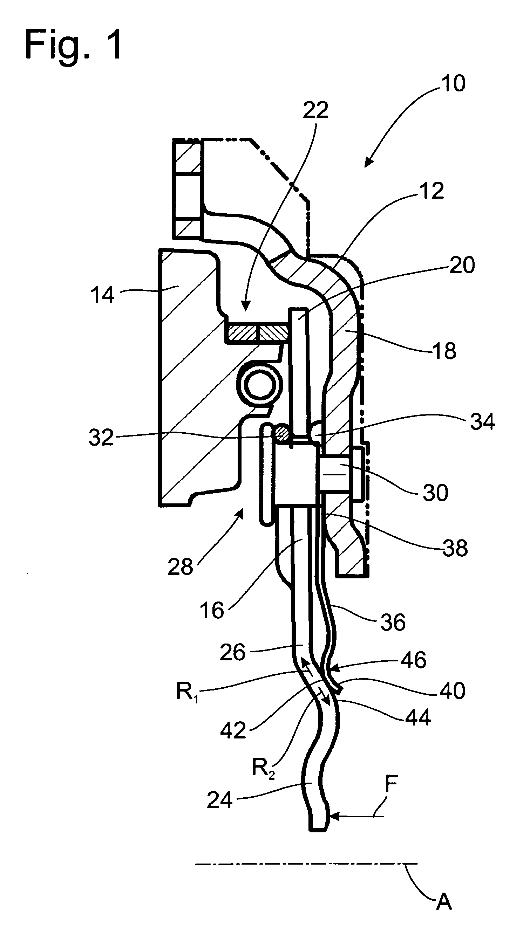

In Fig. 1 ist eine Druckplattenbaugruppe 10 für eine Kraftfahrzeug-Reibungskupplung im Teil-Längsschnitt dargestellt. Die Druckplattenbaugruppe 10 umfasst ein Gehäuse 12, das in seinem radial äußeren Bereich an einem Schwungrad, beispielsweise einem Zweimassenschwungrad, festgelegt werden kann. In dem Gehäuse 12 ist eine ringartig ausgebildete Anpressplatte 14 angeordnet. Diese ist beispielsweise durch Tangentialblattfedern oder dergleichen mit dem Gehäuse 12 zur gemeinsamen Drehung um die Drehachse A gekoppelt, jedoch in einem gewissen Ausmaß axial bezüglich des Gehäuses 12 bewegbar, um Ein- und Auskuppelvorgänge durchführen zu können. Durch die Tangentialblattfedern kann weiterhin eine Lüftkraft bereitgestellt werden, um beim Ausrücken in die Anpressplatte 14 von einer Kupplungsscheibe bzw. deren Reibbelägen abzuheben.

Ein als Membranfeder ausgebildeter Kraftspeicher 16 ist im Gehäuse 12 zwischen einem Bodenbereich 18 desselben und der Anpressplatte 14 angeordnet. In seinem radial äußeren Bereich 20 belastet der Kraftspeicher 16 die Anpressplatte 14 beispielsweise über eine Verschleißkompensationsvorrichtung 22 in Richtung Einkuppeln, also in der Darstellung der Fig. 1 nach links auf eine nicht dargestellte Kupplungsscheibe zu. In seinem radial inneren Bereich 24 wird der Kraftspeicher 16 durch ein in der Fig. 1 durch einen Betätigungskraftpfeil F veranschaulichtes Betätigungssystem beaufschlagt, um zur Durchführung von Betätigungsvorgängen, insbesondere zum Ausrücken, den Kraftspeicher mit seinem radial inneren Bereich 24, der im Wesentlichen auf dem radial inneren Bereich der nach radial innen sich erstreckenden Federzungen 26 des Kraftspeichers 16 entspricht, in Richtung auf die Anpressplatte 14 zu zu bewegen. Dabei verschwenkt der Kraftspeicher 16 mit seinem radial äußeren Bereich 20 in Richtung von der Anpressplatte 14 weg, so dass die auf die Anpressplatte 14 ausgeübte Belastung abnimmt und diese, beispielsweise unter der durch die Tangentialblattfedern erzeugten Lüftkraft, sich in Richtung Ausrücken bewegen kann.

Um diese Verschwenkung zu erreichen, ist der Kraftspeicher 16 in einem mittleren Bereich 28 über eine Mehrzahl von Distanzbolzen 30 am Gehäuse 12 axial getragen bzw. abgestützt. Bei Durchführung von Betätigungsvorgängen verschwenkt der Kraftspeicher 16 um die durch einen Drahtring 32 einerseits bzw. entsprechende Ausformungen 34 am Bodenbereich 18 des Gehäuses 12 andererseits gebildeten Auflagebereiche.

Bei der in Fig. 1 dargestellten Druckplattenbaugruppe 10 ist weiterhin eine beispielsweise ebenfalls als Membranfeder oder Tellerfeder ausgebildete Kompensationsdämpfungsfeder 36 vorgesehen. Diese ist ringartig gestaltet und ist mit ihrem radial äußeren Bereich 38 bezüglich des Gehäuses 12 festgelegt, beispielsweise zwischen dem Bodenbereich 18 und den Distanzbolzen 30 fest eingeklemmt. Insbesondere ist dadurch dafür gesorgt, dass im radial äußeren Bereich 38 bei Verformung die Kompensationsdämpfungsfeder 36 im Wesentlichen keine Radialbewegung bezüglich des Gehäuses 12 durchführen kann. In ihrem radial inneren Bereich 40 weist die Kompensationsdämpfungsfeder 36 einen hier gewölbt ausgebildeten Reibbereich 42 auf. Dieser liegt an einem an dem Kraftspeicher 16 ausgebildeten Gegenreibbereich 44 auf. Man erkennt, dass dort, wo an dem Kraftspeicher 16 der Gegenreibbereich 44 gebildet ist, der Kraftspeicher 16 von radial außen nach radial innen axial angestellt ist, und zwar in Richtung auf die Kompensationsdämpfungsfeder 36 bzw. deren Reibbereich 42 zu.

Bei Durchführung von Betätigungsvorgängen findet eine Relativbewegung zwischen dem Reibbereich 42 und dem Gegenreibbereich 44 statt, wobei dies im Wesentlichen eine Radial-Relativbewegung ist, die aufgrund der axialen Anstellung 46 des Kraftspeichers 16 in seinem Gegenreibbereich 44 von einer Axialbewegungskomponente überlagert ist.

Wird ausgehend von dem in Fig. 1 dargestellten Einrückzustand durch Ausüben einer Ausrückkraft, welche in Richtung des Kraftspeichers F gerichtet ist, die Druckplattenbaugruppe 10 bzw. eine damit ausgestattete Reibungskupplung in Richtung Ausrücken verstellt, so verschwenkt der Kraftspeicher 16 mit seinem radial innerhalb der Auflagebereiche 32, 34 liegenden Abschnitt in Richtung auf die Anpressplatte 14 zu, in der Fig. 1 also nach links bzw. im Uhrzeigersinn. Da die Kompensationsdämpfungsfeder 36 in ihren bezüglich des Gehäuses 12 festgelegten bzw. abgestützten radial äußeren Bereich festgehalten ist, bewegt sich bei dieser Verschwenkbewegung des Kraftspeichers 16 der Reibbereich 42 aufgrund der vorgespannten Einbaulage der Kompensationsdämpfungsfeder 36 entlang des Reibbereichs 44 in Richtung zu weiter radial außen liegenden Bereichen des Gegenreibbereichs 44, also in einer Reibrichtung R₁ in Fig. 1. Bei dieser Relativbewegung zwischen dem Reibbereich 42 und dem Gegenreibbereich 44 bewegt sich weiterhin der Reibbereich 42 entlang des axial angestellten Gegenreibbereichs 44 "bergab". Bei Bewegung in entgegengesetzter Richtung, also beim Einrücken, verschwenkt der Kraftspeicher 16 mit seinem radial innerhalb der Distanzbolzen 30 liegenden Abschnitt im Gegenuhrzeigersinn, also in Fig. 1 nach rechts, so dass der Reibbereich 42 sich bezüglich des Gegenreibbereichs 44 nunmehr in der Reibrichtung R₂, also auch an der axialen Anstellung 46 des Kraftspeichers 16 "bergauf" bewegt.

Aus der vorangehenden Erläuterung erkennt man weiterhin, dass abhängig davon, in welcher Relativrichtung der Reibbereich 42 und der Gegenreibbereich 44 sich bewegen, das Ausrücken, also die Bewegung in der Reibrichtung R₁, zu einer ziehenden Belastung der Kompensationsdämpfungsfeder 36 führt, also diese durch die Reibwechselwirkung bezogen auf ihren Abstütz- bzw. Befestigungsbereich am Gehäuse 12 nach radial innen, also ziehend belastet wird. Bei Bewegung in der Reibrichtung R₂ führt die Reibwechselwirkung zu einer drückenden Belastung der Kompensationsdämpfungsfeder 36, so dass durch die Reibwechselwirkung eine Reaktionskraft ausgeübt wird, welche die Kompensationsdämpfungsfeder 36 in Richtung auf den radial äußeren Bereich 38 derselben zu belastet.

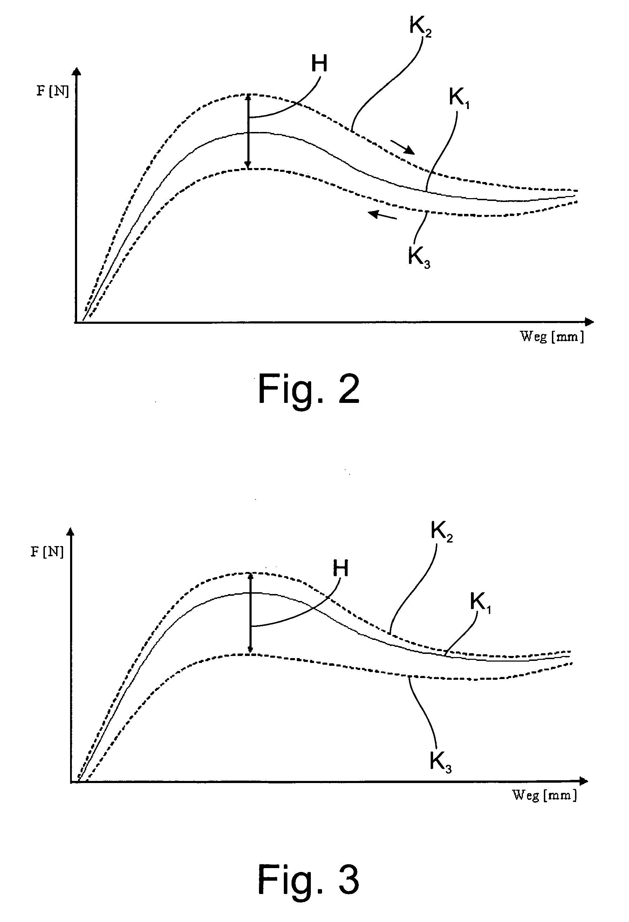

Die durch die Wechselwirkung der Kompensationsdämpfungsfeder 36 mit dem Kraftspeicher 16 eingeführte Wirkcharakteristik wird nachfolgend mit Bezug auf die Fig. 2 und 3 beschrieben.

In der Fig. 2 ist eine Kraftkennlinie K₁ dargestellt. Diese ist die durch das Zusammenwirken der jeweiligen Kraftcharakteristiken der Kompensationsdämpfungsfeder 36 und des Kraftspeichers 16 sich einstellende gemeinsame Federkennlinie. In dieser Kennlinie K₁ führt das Vorhandensein der Kompensationsdämpfungsfeder 36 grundsätzlich dazu, dass eine den Kraftspeicher 16 verstärkt in Richtung Ausrücken, also in Richtung Mindern der Belastung der Anpressplatte 14 belastende Wirkung entsteht, mit der Folge, dass grundsätzlich die zum Ausrücken erforderliche Betätigungskraft gesenkt werden kann, bei im Wesentlichen nicht geminderter maximaler Einrückkraft.

Das Vorhandensein der Reibwechselwirkung zwischen dem Reibbereich 42 und dem Gegenreibbereich 44 führt dazu, dass bei einem Ausrück-Betätigungsvorgang zusätzlich Energie aufgewandt werden muss, um die Reibarbeit zwischen dem Reibbereich 42 und dem Gegenreibbereich 44 leisten zu können. Dies bedeutet, dass bei einem Ausrückbetätigungsvorgang die Kennlinie K₁ tatsächlich verschoben ist zu einer Kennlinie K₂. Diese liegt aufgrund der Tatsache, dass zusätzlich Reibarbeit geleistet werden muss, bei einer höheren Betätigungskraft.

Bei Durchführung eines Einrückvorgangs entspannt sich der Kraftspeicher 16 aufgrund der zunehmend geminderten auf diesen einwirkenden Betätigungskraft F. Diese Entspannung erfolgt gegen die Wirkung der Kompensationsdämpfungsfeder 36, was in der Kennlinie K₁ bereits enthalten ist, erfolgt jedoch zusätzlich auch noch gegen die Reibwechselwirkung zwischen dem Reibbereich 42 und dem Gegenreibbereich 44, bei deren Relativbewegung in der Reibrichtung R₂. Das heißt, die in diesem Falle aufzubringende Reibarbeit wird aus der bei Entspannung des Kraftspeichers 16 frei werdenden Energie abgezweigt, mit der Folge, dass der Kraftspeicher 16 nur mit geminderter Kraft, diese repräsentiert durch die Kennlinie K₃, die Anpressplatte 14 belastet.

Je nachdem, ob ein Ausrück-Betätigungsvorgang oder ein Einrück-Betätigungsvorgang vorliegt, bewegt sich das System also entlang der Kennlinie K₂ oder entlang der Kennlinie K₃. Dies führt zu einer maximalen Hysterese H am jeweiligen Scheitelbereich der Kennlinien K₂ und K₃. Diese Hysterese, bzw. der zu dem Entstehen der Hysterese H führende Reibeffekt bei Durchführung von Betätigungsvorgängen hat zur Folge, dass das Auftreten von Schwingungen der Anpressplatte 14, welche insbesondere durch Taumelbewegungen oder sonstige axiale Anregungen im Antriebsstrang entstehen können, weitestgehend unterbunden wird.

Man erkennt in Fig. 2 einen Verlauf der beiden Kennlinien K₁ und K₂ mit bezüglich der Ausgangskennlinie K₁, welche im Wesentlichen den Fall ohne Reibwechselwirkung repräsentiert, näherungsweise symmetrischer Verschiebung nach oben bzw. nach unten. Dies hat zur Folge, dass insbesondere bei einer manuell zu betätigenden Kupplung für den Fahrer eines Fahrzeugs ein deutlicher Anstieg der Betätigungskraft auftritt, was im Allgemeinen als unkomfortabel empfunden wird. Bei automatisiert betätigten Kupplungen erfordert dies eine stärkere Dimensionierung der hierfür eingesetzten Aktuatoren.

Die Fig. 3 zeigt ein Beispiel mit bezüglich der Ausgangskennlinie K₁ nicht symmetrischer Verschiebung der beiden Kennlinien K₂ für den Ausrück-Betätigungsvorgang bzw. K₃ für den Einrück-Betätigungsvorgang. Insbesondere erkennt man, dass die für den Ausrück-Betätgungsvorgang relevante Kennlinie K₂ vergleichsweise wenig bezüglich der Ausgangskennlinie K₁ nach oben verschoben ist, während die für den Einrück-Betätigungsvorgang relevante Kennlinie K₃ wesentlich stärker nach unten verschoben ist, so dass nicht nur eine asymmetrische Lage bezüglich der Kennlinie K₁, sondern auch eine größere maximale Hysterese H vorliegt. Bei derartigem Kennlinienverlauf wird erreicht, dass trotz des weiterhin bzw. noch verstärkt nutzbaren Reibeffekt zum Vermeiden von Schwingungsanregungen der Anpressplatte 14 der Anstieg der Betätigungskraft beim Ausrücken deutlich weniger ausgeprägt ist und insofern für den Fahrer eines Fahrzeugs praktisch störend ist.

Diese in der Fig. 3 erkennbare ausgeprägte asymmetrische Verschiebung der Kennlinien K₂ und K₃ bezüglich der Ausgangskennlinie K₁ wird bei der in Fig. 1 dargestellten Druckplattenbaugruppe 10 dadurch erreicht, dass die zwischen dem Reibbereich 42 und dem Gegenreibbereich 44 vorhandene Reibwechselwirkung für den Einrück-Betätigungsvorgang einerseits und den Ausrück-Betätigungsvorgang andererseits zu unterschiedlichen Reibwiderständen führt. Der bei Durchführung eines Ausrück-Betätigungsvorgangs entstehende Reibwiderstand ist deutlich geringer, als der bei Durchführung eines Einrück-Betätigungsvorgangs auftretende Reibwiderstand. Dies ist primär dadurch verursacht, dass der Reibbereich 42 bei seiner Bewegung in der Reibrichtung R₁ bezüglich des Gegenreibbereichs 44 sich in Richtung nach radial außen bezüglich des Gegenreibbereichs 44, also auch in Richtung "bergab" der axialen Anstellung des Gegenreibbereichs 44 bewegt, und zwar in einer ziehenden Bewegung. Dies führt zu einem deutlich geringeren Reibwiderstand im Vergleich zu dem Fall, in welchem der Reibbereich 42 in der Reibrichtung R₂ sich bezüglich des Gegenreibbereichs 44 nach radial innen, also in Richtung von grundsätzlich weiter radial innen liegenden Bereichen desselben und dabei "bergauf" bezüglich der Anstellung des Gegenreibbereichs 44 bewegt, dies bei einer drückenden, also den Reibbereich 42 gegen den Gegenreibbereich 44 drückenden Bewegung.

Durch die Richtung und auch die Stärke der Anstellung des Gegenreibbereichs 44 wird es somit möglich, die Verschiebung der beiden Kennlinien K₂ und K₃ bezüglich der Ausgangskennlinie K₁ zu beeinflussen und somit einerseits einen Reibeffekt zum Verhindern von Schwingungsanregungen zu nutzen, andererseits aber die Betätigungscharakteristik der Druckplattenbaugruppe 10 möglichst wenig zu beeinflussen. Eine Anstellung des Gegenreibbereicsh 44 in der entgegengesetzten Richtung, also in Richtung vom Reibbereich 42 weg, kann zu einer Verschiebung der Hysterese H nach oben führen, so dass beispielsweise der Verlauf der Kennlinie K₃ sehr nahe am Verlauf der Kennlinie K₁ liegt, während die Kennlinie K₂ dann bezüglich der Kennlinie K₁ deutlich nach oben verschoben ist. Dieser Effekt könnte beispielsweise dann vorteilhaft genutzt werden, wenn bei einem automatisiert betätigten System die Dimensionierung der Aktuatoren kein Problem ist, also die zusätzlich erforderliche Betätigungskraft aufgebracht werden kann, während gleichzeitig dann die im vollständig eingerückten Zustand nutzbare Einrückkraft des Kraftfspeichers 16 näher an der durch die Kennlinie K₁ vorgegebenen Einrückkraft liegt. Dies bedeutet, dass es beispielsweise nicht erforderlich ist, die durch die Verschiebung der Kennlinie K₁ grundsätzlich auftretende Minderung der Einrückkraft dadurch zu kompensieren, dass ein stärker dimensionierter Kraftspeicher 16 eingesetzt wird.

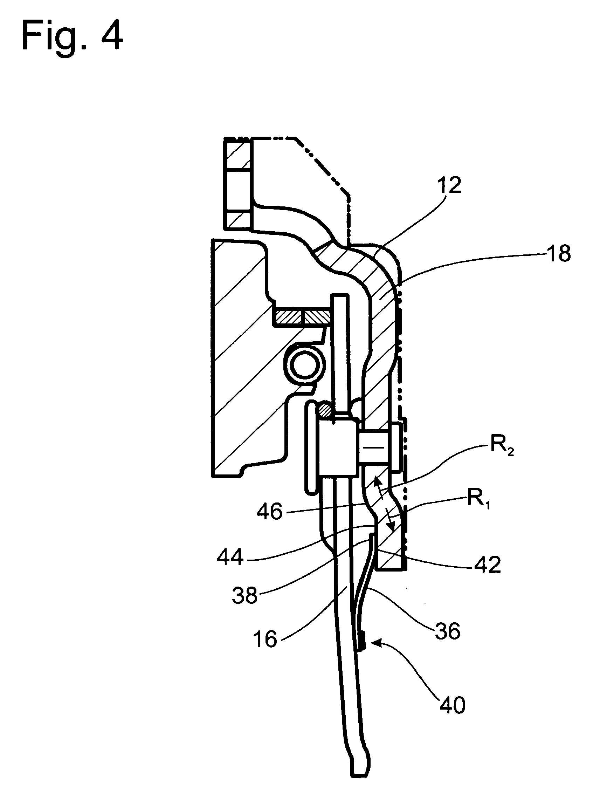

Die Fig. 4 zeigt eine alternative Ausgestaltung der Druckplattenbaugruppe 10. Hier ist die Kompensationsdämpfungsfeder 36 mit ihrem radial inneren Bereich 40 beispielsweise durch Vernietung oder dergleichen am Kraftspeicher 16 festgelegt. Der radial äußere Bereich 38 stellt nunmehr den Reibbereich 42 bereit, der gleitreibend entlang des Gegenreibbereichs 44 bewegbar ist. Auch dieser kann eine nunmehr am Bodenbereich 18 des Gehäuses 12 ausgebildete axiale Anstellung 46 aufweisen, wobei auch hier diese axiale Anstellung 46 in Richtung auf den Reibbereich 42 bzw. die Kompensationsdämpfungsfeder 36 zu gerichtet ist. Bei Bewegung in der Reibrichtung R₁, also bei Durchführung eines Ausrück-Betätigungsvorgangs, bewegt sich der Reibbereich 42 wieder derart entlang des Gegenreibbereichs 44 bzw. der Anstellung 46, dass der dabei auftretende Reibwiderstand geringer ist, als bei Bewegung in der Reibrichtung R₂ bergauf entlang der Anstellung 46.

Man erkennt in der Fig. 4 weiter, dass der Reibbereich 44 mit seiner Anstellung 46 auch so ausgebildet sein kann, dass nur in einem Teilbereich der Relativbewegung zwischen dem Reibbereich 42 und dem Gegenreibbereich 44 die Anstellung 46 durchlaufen werden kann und dadurch ein substantieller Einfluss auf die Lage der Kennlinie K₂ und K₃ genommen wird.

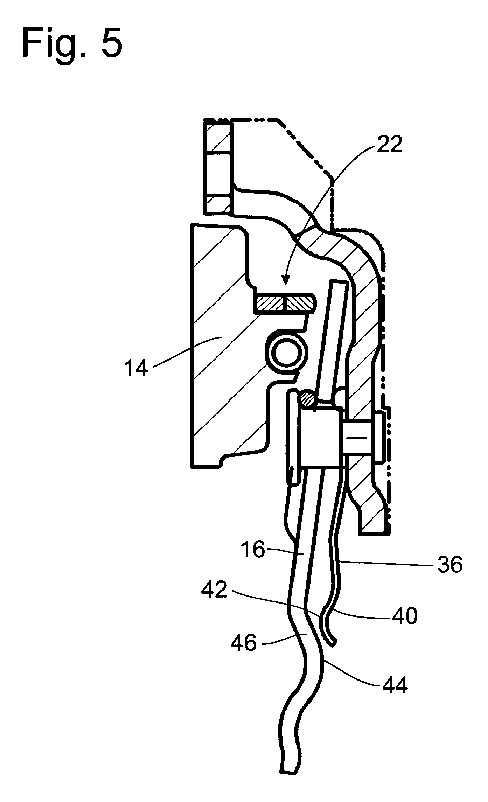

Die Fig. 5 zeigt in Weiterbildung beispielsweise der in Fig. 1 dargestellten Ausgestaltungsform eine weitere Möglichkeit, die Lage der Kennlinien K₂ und K₃ zu beeinflussen. Insbesondere erkennt man, dass in dem in der Fig. 5 dargestellten Ausrückzustand der Kraftspeicher 16 so weit verschwenkt ist, dass dieser nicht nur von der Anpressplatte 16 bzw. der Verschleißkompensationsvorrichtung 22 abgehoben hat, sondern auch nicht mehr in Kontakt mit der Kompensationsdämpfungsfeder 36 ist. Dies bedeutet, dass ab einem durch Einstellung der Vorspannung der Kompensationsdämpfungsfeder 36 einerseits und auch die Formgebung derselben bzw. des Kraftspeichers 16 andererseits beeinflussbaren Betätigungszustand die Wirkung der Kompensationsdämpfungsfeder 36 aufgehoben wird und diese somit weder den Kraftspeicher 16 in Richtung Ausrücken vorspannt, noch zur Erzeugung einer Reibwechselwirkung wirksam ist. Erst dann, wenn wieder eine Einrück-Betätigung durchgeführt wird, kommt der Kraftspeicher 16 mit seinem Gegenreibbereich 44 im Bereich der Anstellung 46 wieder in Kontakt mit dem Reibbereich 42 am radial inneren Bereich 40 der Kompensationsdämpfungsfeder 36.

Bei dieser Ausgestaltungsform ist also die zwischen der Kompensationsdämpfungsfeder 36 und der in Reibwechselwirkung mit dieser tretenden Komponente, hier der Kraftspeicher 16, generierte Reibwechselwirkung nur in einem Teilbereich des Betätigungswegs vorhanden. Hier kann die Auslegung vor allem derart sein, dass die durch diese Reibwechselwirkung erzeugte Reibkraft, welche die Schwingungen der Anpressplatte 14 dämpfen soll, zwischen einem Einkuppelpunkt und einem Abwürgpunkt vorhanden ist.

Vorangehend wurden die Prinzipien der vorliegenden Erfindung mit Bezug auf eine Druckplattenbaugruppe für eine Reibungskupplung des gedrückten Typs erläutert, bei welcher durch Durchführung von Ausrück-Betätigungsvorgängen radial innen auf den Kraftspeicher gedrückt wird, dieser also in Richtung auf die Anpressplatte zu belastet wird. Selbstverständlich können die Prinzipien der Erfindung auch Anwendung finden bei einer so genannten gezogenen Kupplung. Bei dieser wird zur Durchführung von Ausrück-Betätigungsvorgängen am Kraftspeicher radial innen ziehend angegriffen, dieser also in Richtung von der Anpressplatte weg belastet.

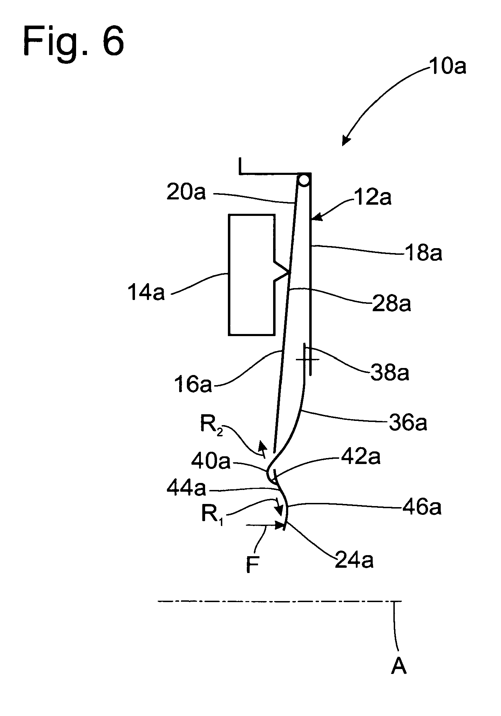

In der Fig. 6 ist eine Druckplattenbaugruppe 10a für eine derartige gezogene Kupplung in prinzipartiger Weise dargestellt. Man erkennt, dass der Kraftspeicher 16a in seinem radial äußeren Bereich 20a axial am Gehäuse 12a abgestützt ist, in seinem radial mittleren Bereich die Anpressplatte 14a, ggf. in unter Zwischenlagerung einer Verschleißkompensationsvorrichtung, belastet und in seinem radial inneren Bereich 24a mit einer zum Ausrücken erforderlichen Betätigungskraft F in Richtung von der Anpressplatte 14a weg zu belasten ist.

Die Kompensationsdämpfungsfeder 36a, beispielsweise wieder ausgebildet als Membranfeder oder Tellerfeder, ist in ihrem radial äußeren Bereich 38a am Gehäuse 12a festgelegt und durchgreift mit ihrem radial inneren Bereich, beispielsweise mit mehreren dort vorgesehenen Armabschnitten oder dergleichen, den Kraftspeicher 16a, beispielsweise in den zwischen den Federzungen desselben gebildeten Zwischenräumen. Mit ihrem radial inneren Bereich 40a bzw. dem dort gebildeten Reibbereich 42a hintergreift also die Kompensationsdämpfungsfeder 36a den Kraftspeicher 16a und stützt sich an dem nunmehr an der der Anpressplatte zugewandten Seite gebildeten Gegenreibbereich 44a desselben ab. Auch hier erzeugt die Kompensationsdämpfungsfeder 36a durch einen vorgespannten Einbau eine den Kraftspeicher 16a grundsätzlich in Richtung Ausrücken, also auch in Richtung Mindern der Belastung der Anpressplatte 14a belastende Kraftwirkung. Bei Durchführung eines Ausrück-Betätigungsvorgangs bewegt sich der Reibbereich 42a bezüglich des Gegenreibbereichs 44a in der Reibrichtung R₁, also zu grundsätzlich weiter radial innen gelegenen Bereichen des Gegenreibbereichs 44a, und bergab entlang der im Gegenreibbereich 44a gebildeten axialen Anstellung 46a. Diese ist nunmehr in Richtung von Reibbereich 42a weg ausgebildet. Bei Durchführung von Einrück-Betätigungsvorgängen und Bewegung des Reibbereichs 42a entlang des Gegenreibbereichs 44a in der Reibrichtung R2 gleitet der Reibbereich 42a bergauf entlang der Anstellung 46a, so dass wieder der vorangehend mit Bezug auf die Fig. 3 bereits dargestellte Effekt der Beeinflussung der Verschiebung der Kennlinien K₂ und K₃ erreicht werden kann.

Es wird darauf hingewiesen, dass der erfindungsgemäße Effekt des Einführens abhängig von dem durchzuführenden Betätigungsvorgang sich unterscheidender Reibwiderstände auch erreicht oder unterstützt werden kann durch andere Effekte, wie z. B. die Ausgestaltung der Oberflächen des Reibbereichs bzw. des Gegenreibbereichs. Hier könnte eine derartige Strukturierung vorgesehen sein, beispielsweise Mikrostrukturierung, dass bei Relativbewegung in der einen Richtung ein geringerer Widerstand entsteht, als bei Relativbewegung in der anderen Richtung. Beispielsweise eine entsprechend orientierte Mikro-Sägezahnstrukturierung könnte diesen Effekt zur Folge haben, insbesondere bei Kombination mit einer ziehenden oder einer drückenden Bewegung.

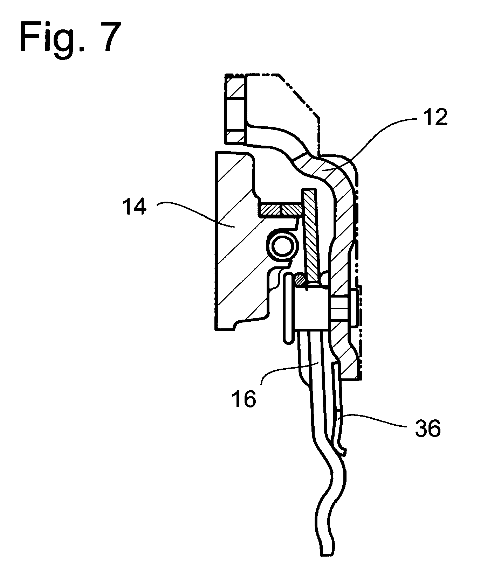

Die Fig. 7 zeigt eine weitere vorteilhafte Weiterbildung der in Fig. 1 dargestellten Ausgestaltungsform der Druckplattenbaugruppe. Im Gegensatz zu den Ausführungsbeispielen der Figuren 1, 4 und 5 ist in Fig. 7 die Kompensationsdämpfungsfeder 36 lose zwischen dem Gehäuse und dem Kraftspeicher 16 eingelegt. Eine Zentrierung erfolgt durch die gewählte Schräge des Reibbereichs der Kompensationsdämpfungsfeder 36 auf der Wölbung des Kraftspeichers 16. Somit zentriert sich die Kompensationsfeder selbst. Es versteht sich, dass im Gegensatz zur Figur 5, die Kompensationsfeder über den gesamten Verschwenkungsbereich des Kraftspeichers an diesem zuverlässig anliegen muss.

Alternativ kann die Zentrierung der Kompensationsdämpfungsfeder auch über das Gehäuse 12 erfolgen, wenn der Anlagebereich am Gehäuse mit einer entsprechenden Schräge ausgebildet ist.

Es ist auch denkbar dass die Kompensationsdämpfungsfeder an ihrem radialen Außenumfang an am Gehäuse ausgebildeten Nocken anliegt, welche auch eine radiale Zentrierung bewirken.

Die Ausgestaltung mit einer losen, nicht fest angebundenen Kompensationsdämpfungsfeder hat den weiteren Vorteil, dass bei loser Kompensationsdämpfungsfeder, also weder am Gehäuse angebunden noch am Kraftspeicher angebunden, die Ausgestaltung des Reibbereichs der Kompensationsdämpfungsfeder so gewählt werden kann, dass der Reibbereich der Kompensationsdämpfungsfeder entweder überwiegend am Kraftspeicher entsprechend Figur 1 ist, oder überwiegend am Gehäuse entsprechend Figur 4. Durch entsprechende Ausgestaltung der beiden Anlagebereiche der Kompensationsdämpfungsfeder ist es somit möglich, die Reibbereiche entweder so zu wählen, dass die Reibbewegung und der Reibwiderstand der Kompensationsdämpfungsfeder am Kraftspeicher oder am Gehäuse größer ist. Somit ist eine gewünschte Hysterese entsprechend den Figuren 2 und 3 leichter realisierbar. In Figur 7 ist der Reibwiderstand am Kraftspeicher 16 größer als der am Gehäuse 12, an welchem die Kompensationsdämpfungsfeder eine wesentlich geringere Reibbewegung als am Kraftspeicher 16 während des Betätigungsvorgangs macht.

Ein weiterer Vorteil besteht darin, dass die Druckplattenbaugruppe kompakter und günstiger herstellbar ist.

Es sei nochmals darauf hingewiesen, dass die zu den Figuren 1 bis 6 gemachten Ausführung bezüglich des Aufbaus entsprechend auch für das Ausführungsbeispiel der Figur 7 gelten.

## Patentansprüche

1. Druckplattenbaugruppe für eine Reibungskupplung, umfassend ein Gehäuse (12; 12a) und eine mit dem Gehäuse (12: 12a) um eine Drehachse (A) drehbare und bezüglich diesem axial verlagerbare Anpressplatte (14; 14a), einen bezüglich des Gehäuses (12; 12a) und der Anpressplatte (14; 14a) abgestützten Kraftspeicher (16; 16a), welcher zur Durchführung von Betätigungsvorgängen bezüglich des Gehäuses (12; 12a) bewegbar ist und durch welchen die Anpressplatte (14; 14a) in einer Einrückrichtung belastbar ist, wenigstens eine Kompensationsdämpfungsfeder (36; 36a) zum teilweisen Kompensieren einer durch den Kraftspeicher (16; 16a) auf die Anpressplatte (14; 14a) ausübbaren Einrückkraft, wobei die wenigstens eine Kompensationsdämpfungsfeder (36; 36a) bezüglich des Kraftspeichers (16; 16a) und bezüglich des Gehäuses (12; 12a) abgestützt ist und bei Durchführung eines Betätigungsvorgangs bezüglich einer die Kompensationsdämpfungsfeder (36; 36a) abstützenden Komponente reibend bewegbar ist,
**dadurch gekennzeichnet, dass** ein bei einem Einrück-Betätigungsvorgang auftretender erster Reibwiderstand sich von einem bei einem Ausrück-Betätigungsvorgang auftretenden zweiten Reibwiderstand unterscheidet.

2. Druckplattenbaugruppe nach Anspruch 1,
**dadurch gekennzeichnet, dass** der erste Reibwiderstand größer als der zweite Reibwiderstand ist.

3. Druckplattenbaugruppe nach Anspruch 1 oder 2,
**dadurch gekennzeichnet, dass** wenigstens eine Kompensationsdämpfungsfeder (16; 16a) an dem Gehäuse (12; 12a) oder einer sich bei Durchführung eines Betätigungsvorgangs im Wesentlichen nicht bezüglich des Gehäuses (12; 12a) verlagernden Komponente wenigstens gegen radiale Bewegung festgelegt ist und an dem Kraftspeicher (16; 16a) oder einer sich bei Durchführung eines Betätigungsvorgangs im Wesentlichen nicht bezüglich des Kraftspeichers (16; 16a) verlagernden Komponente reibend bewegbar ist.

4. Druckplattenbaugruppe nach Anspruch 1, 2 oder 3,
**dadurch gekennzeichnet, dass** wenigstens eine Kompensationsdämpfungsfeder (36) an dem Kraftspeicher (16) oder einer sich bei Durchführung eines Betätigungsvorgangs im Wesentlichen nicht bezüglich des Kraftspeichers (16) verlagernden Komponente wenigstens gegen Radialbewegung festgelegt ist und an dem Gehäuse (12) oder einer sich bei Durchführung eines Betätigungsvorgangs im Wesentlichen nicht bezüglich des Gehäuses (12) verlagernden Komponente reibend bewegbar ist.

5. Druckplattenbaugruppe nach einem der Ansprüche 1 bis 4,
**dadurch gekennzeichnet, dass** die wenigstens eine Kompensationsdämpfungsfeder (36; 36a) bei einem Ausrück-Betätigungsvorgang mit einem Reibbereich (42; 42a) derselben bezogen auf einen Befestigungsbereich derselben ziehend entlang eines Gegenreibbereichs (44; 44a) bewegbar ist und bei Durchführung eines Einrück-Betätigungsvorgangs drückend entlang des Gegenreibbereichs (44; 44a) bewegbar ist.

6. Druckplattenbaugruppe nach einem der Ansprüche 1 bis 5,
**dadurch gekennzeichnet, dass** einem Reibbereich (42; 42a) der wenigstens einen Kompensationsdämpfungsfeder (36; 36a) ein Gegenreibbereich (44; 44a) an der in Reibwechselwirkung mit dieser bringbaren Komponente zugeordnet ist und dass Reibbereich (42; 42a) und Gegenreibbereich (44; 44a) bei Durchführung eines Betätigungsvorgangs eine Relativbewegung, vorzugsweise Relativ-Radialbewegung, bezüglich einander durchführen.

7. Druckplattenbaugruppe nach Anspruch 6,
**dadurch gekennzeichnet, dass** der Gegenreibbereich (44; 44a) axial angestellt ist.

8. Druckplattenbaugruppe nach Anspruch 7,
**dadurch gekennzeichnet, dass** der Gegenreibbereich (44) in Richtung auf den Reibbereich (42) der wenigstens einen Kompensationsdämpfungsfeder (36) zu axial angestellt ist.

9. Druckplattenbaugruppe nach einem der Ansprüche 1 bis 8,
**dadurch gekennzeichnet, dass** der Kraftspeicher (16) in seinem radial äußeren Bereich (20) die Anpressplatte (14) beaufschlagt, in seinem radial inneren Bereich (24) durch eine Betätigungsanordnung zur Durchführung von Betätigungsvorgängen beaufschlagbar ist und radial zwischen dem radial äußeren Bereich (20) und dem radial inneren Bereich (24) bezüglich des Gehäuses (12) abgestützt ist.

10. Druckplattenbaugruppe nach einem der Ansprüche 1 bis 7,
**dadurch gekennzeichnet, dass** der Kraftspeicher (16a) in seinem radial äußeren Bereich (20) bezüglich des Gehäuses (12a) abgestützt ist, in seinem radial inneren Bereich (24a) durch eine Betätigungsanordnung zur Durchführung von Betätigungsvorgängen beaufschlagbar ist und radial zwischen dem radial äußeren Bereich (20a) und dem radial inneren Bereich (24a) die Anpressplatte (14a) beaufschlagt.

11. Druckplattenbaugruppe nach einem der Ansprüche 1 bis 7 oder Anspruch 10,
**dadurch gekennzeichnet, dass** der Gegenreibbereich (44a) in Richtung von dem Reibbereich (42a) der wenigstens einen Kompensationsdämpfungsfeder (36a) weg axial angestellt ist.

12. Druckplattenbaugruppe nach einem der Ansprüche 1 bis 11,
**dadurch gekennzeichnet, dass** die wenigstens eine Kompensationsdämpfungsfeder (36; 36a) im Wesentlichen an einer von der Anpressplatte (14; 14a) abgewandten axialen Seite des Kraftspeichers angeordnet ist.

13. Druckplattenbaugruppe nach einem der Ansprüche 1 bis 12,
**dadurch gekennzeichnet, dass** die wenigstens eine Kompensationsdämpfungsfeder (36; 36a) als Tellerfeder oder Membranfeder ausgebildet ist.

14. Druckplattenbaugruppe nach wenigstens einem der Ansprüche 1 bis 13,
**dadurch gekennzeichnet, dass** die wenigstens eine Kompensationsdämpfungsfeder (36; 36a) weder am Kraftspeicher (16, 16a) noch am Gehäuse (12, 12a) festgelegt ist

15. Reibungskupplung, umfassend eine Druckplattenbaugruppe (10; 10a) nach einem der vorangehenden Ansprüche.

## Claims

1. Thrust plate assembly for a friction clutch, comprising a housing (12; 12a) and a pressure plate (14; 14a) which is rotatable with the housing (12; 12a) about an axis of rotation (A) and axially displaceable relative to said housing, a force store (16; 16a) which is supported with respect to the housing (12; 12a) and the pressure plate (14; 14a), which force store is movable with respect to the housing (12; 12a) for the execution of actuating processes and by means of which force store the pressure plate (14; 14a) can be loaded in an engagement direction, at least one compensation damping spring (36; 36a) for partially compensating an engagement force which can be exerted on the pressure plate (14; 14a) by the force store (16; 16a), wherein the at least one compensation damping spring (36; 36a) is supported with respect to the force store (16; 16a) and with respect to the housing (12; 12a) and, during the execution of an actuating process, can be moved with friction with respect to a component which supports the compensation damping spring (36; 36a),
**characterized in that** a first friction resistance which arises during an engagement actuating process differs from a second friction resistance which arises during a disengagement actuating process.

2. Thrust plate assembly according to Claim 1,
**characterized in that** the first friction resistance is greater than the second friction resistance.

3. Thrust plate assembly according to Claim 1 or 2,
**characterized in that** at least one compensation damping spring (16; 16a) is fixed, at least so as to be secured against radial movement, to the housing (12; 12a) or to a component which is substantially not displaced with respect to the housing (12; 12a) during the execution of an actuating process, and is movable with friction on the force store (16; 16a) or on a component which is substantially not displaced with respect to the force store (16; 16a) during the execution of an actuating process.

4. Thrust plate assembly according to Claim 1, 2 or 3,
**characterized in that** at least one compensation damping spring (36) is fixed, at least so as to be secured against radial movement, to the force store (16) or to a component which is substantially not displaced with respect to the force store (16) during the execution of an actuating process, and is movable with friction on the housing (12) or on a component which is substantially not displaced with respect to the housing (12) during the execution of an actuating process.

5. Thrust plate assembly according to one of Claims 1 to 4,
**characterized in that** the at least one compensation damping spring (36; 36a), with a friction region (42; 42a) thereof, is movable with a pulling action in relation to a fastening region thereof along a counterpart friction region (44; 44a) during a disengagement actuating process, and is movable with a pushing action along the counterpart friction region (44; 44a) during the execution of an engagement actuation process.

6. Thrust plate assembly according to one of Claims 1 to 5, **characterized in that** a friction region (42; 42a) of the at least one compensation damping spring (36; 36a) is assigned a counterpart friction region (44; 44a) on the component which can be placed in frictional interaction with said at least one compensation damping spring, and **in that**, during the execution of an actuating process, the friction region (42; 42a) and counterpart friction region (44; 44a) perform a relative movement, preferably relative radial movement, with respect to one another.

7. Thrust plate assembly according to Claim 6, **characterized in that** the counterpart friction region (44; 44a) is inclined axially.

8. Thrust plate assembly according to Claim 7, **characterized in that** the counterpart friction region (44) is inclined axially in the direction of the friction region (42) of the at least one compensation damping spring (36).

9. Thrust plate assembly according to one of Claims 1 to 8,
**characterized in that** the force store (16), in its radially outer region (20), acts on the pressure plate (14), in its radially inner region (24), can be acted on by an actuating arrangement for the execution of actuating processes, and radially between the radially outer region (20) and the radially inner region (24), is supported with respect to the housing (12).

10. Thrust plate assembly according to one of Claims 1 to 7, **characterized in that** the force store (16a), in its radially outer region (20), is supported with respect to the housing (12a), in its radially inner region (24a), can be acted on by an actuating arrangement for the execution of actuating processes, and radially between the radially outer region (20a) and the radially inner region (24a), acts on the pressure plate (14a).

11. Thrust plate assembly according to one of Claims 1 to 7 or Claim 10, **characterized in that** the counterpart friction region (44a) is inclined in a direction axially away from the friction region (42a) of the at least one compensation damping spring (36a).

12. Thrust plate assembly according to one of Claims 1 to 11, **characterized in that** the at least one compensation damping spring (36; 36a) is arranged substantially on an axial side, which faces away from the pressure plate (14; 14a), of the force store.

13. Thrust plate assembly according to one of Claims 1 to 12,
**characterized in that** the at least one compensation damping spring (36; 36a) is designed as a plate spring or diaphragm spring.

14. Thrust plate assembly according to at least one of Claims 1 to 13,
**characterized in that** the at least one compensation damping spring (36; 36a) is fixed neither to the force store (16, 16a) nor to the housing (12, 12a).

15. Friction clutch comprising a thrust plate assembly (10; 10a) according to one of the preceding claims.

## Revendications

1. Module de plaque de pression pour un embrayage à friction, comprenant un boîtier (12 ; 12a) et une plaque de pression (14 ; 14a) pouvant tourner avec le boîtier (12 ; 12a) autour d'un axe de rotation (A) et déplaçable axialement par rapport à celui-ci, un accumulateur de force (16 ; 16a) supporté par rapport au boîtier (12 ; 12a) et à la plaque de pression (14 ; 14a), qui peut être déplacé par rapport au boîtier (12 ; 12a) pour effectuer des opérations d'actionnement et par le biais duquel la plaque de pression (14 ; 14a) peut être sollicitée dans une direction d'embrayage, au moins un ressort amortisseur de compensation (36 ; 36a) pour compenser en partie une force d'embrayage qui peut être exercée par l'accumulateur de force (16 ; 16a) sur la plaque de pression (14 ; 14a), l'au moins un ressort amortisseur de compensation (36 ; 36a) étant supporté par rapport à l'accumulateur de force (16 ; 16a) et par rapport au boîtier (12 ; 12a) et lors de la réalisation d'une opération d'actionnement, pouvant être déplacé par friction par rapport à un composant supportant le ressort amortisseur de compensation (36 ; 36a),
**caractérisé en ce qu'**une première résistance de friction se produisant dans le cas d'une opération d'actionnement d'embrayage se distingue d'une deuxième résistance de friction se produisant dans le cas d'une opération d'actionnement de débrayage.

2. Module de plaque de pression selon la revendication 1,
**caractérisé en ce que** la première résistance de friction est supérieure à la deuxième résistance de friction.

3. Module de plaque de pression selon la revendication 1 ou 2,
**caractérisé en ce qu'**au moins un ressort amortisseur de compensation (36 ; 36a) est fixé, au moins contre un mouvement radial, sur le boîtier (12 ; 12a) ou sur un composant ne se déplaçant sensiblement pas par rapport au boîtier (12 ; 12a) lors de la réalisation d'une opération d'actionnement, et peut être déplacé par friction sur l'accumulateur de force (16 ; 16a) ou sur un composant ne se déplaçant sensiblement pas par rapport à l'accumulateur de force (16 ; 16a) lors de la réalisation d'une opération d'actionnement.

4. Module de plaque de pression selon la revendication 1, 2 ou 3,
**caractérisé en ce qu'**au moins un ressort amortisseur de compensation (36) est fixé, au moins contre un mouvement radial, sur l'accumulateur de force (16) ou sur un composant ne se déplaçant sensiblement pas par rapport à l'accumulateur de force (16) lors de la réalisation d'une opération d'actionnement et peut être déplacé par friction sur le boîtier (12) ou sur un composant ne se déplaçant sensiblement pas par rapport au boîtier (12) lors de la réalisation d'une opération d'actionnement.

5. Module de plaque de pression selon l'une quelconque des revendications 1 à 4,
**caractérisé en ce que** l'au moins un ressort amortisseur de compensation (36 ; 36a) peut être déplacé lors d'une opération d'actionnement de débrayage avec une région de friction (42 ; 42a) de celui-ci, par traction par rapport à une région de fixation de celui-ci, le long d'une région de friction conjuguée (44 ; 44a), et lors d'une opération d'actionnement d'embrayage peut être déplacé par pression le long de la région de friction conjuguée (44 ; 44a).

6. Module de plaque de pression selon l'une quelconque des revendications 1 à 5,
**caractérisé en ce qu'**une région de friction conjuguée (44 ; 44a) sur le composant pouvant être amené en interaction de friction avec le ressort amortisseur de compensation (36 ; 36a), est associée à une région de friction (42 ; 42a) de l'au moins un ressort amortisseur de compensation et **en ce que** la région de friction (42 ; 42a) et la région de friction conjuguée (44 ; 44a) effectuent l'une par rapport à l'autre un mouvement relatif, de préférence un mouvement radial relatif, lors de la réalisation d'une opération d'actionnement.

7. Module de plaque de pression selon la revendication 6,
**caractérisé en ce que** la région de friction conjuguée (44 ; 44a) est inclinée axialement.

8. Module de plaque de pression selon la revendication 7,
**caractérisé en ce que** la région de friction conjuguée (44) est inclinée axialement dans la direction de la région de friction (42) de l'au moins un ressort amortisseur de compensation (36).

9. Module de plaque de pression selon l'une quelconque des revendications 1 à 8,
**caractérisé en ce que** l'accumulateur de force (16), dans sa région radialement extérieure (20), sollicite la plaque de pression (14), dans sa région radialement intérieure (24), peut être sollicité par un agencement d'actionnement pour effectuer des opérations d'actionnement, et est supporté radialement par rapport au boîtier (12) entre la région radialement extérieure (20) et la région radialement intérieure (24).

10. Module de plaque de pression selon l'une quelconque des revendications 1 à 7,
**caractérisé en ce que** l'accumulateur de force (16a) est supporté dans sa région radialement extérieure (20) par rapport au boîtier (12a), peut être sollicité dans sa région radialement intérieure (24a) par un agencement d'actionnement pour effectuer des opérations d'actionnement et sollicite radialement la plaque de pression (14a) entre la région radialement extérieure (20a) et la région radialement intérieure (24a).

11. Module de plaque de pression selon l'une quelconque des revendications 1 à 7 ou selon la revendication 10,
**caractérisé en ce que** la région de friction conjuguée (44a) est inclinée axialement dans la direction s'écartant de la région de friction (42a) de l'au moins un ressort amortisseur de compensation (36a).

12. Module de plaque de pression selon l'une quelconque des revendications 1 à 11,
**caractérisé en ce que** l'au moins un ressort amortisseur de compensation (36 ; 36a) est disposé substantiellement sur un côté axial de l'accumulateur de force opposé à la plaque de pression (14 ; 14a).

13. Module de plaque de pression selon l'une quelconque des revendications 1 à 12, **caractérisé en ce que** l'au moins un ressort amortisseur de compensation (36 ; 36a) est réalisé sous forme de ressort Belleville ou de ressort à membrane.

14. Module de plaque de pression selon l'une quelconque des revendications 1 à 13,
**caractérisé en ce que** l'au moins un ressort amortisseur de compensation (36 ; 36a) n'est fixé ni à l'accumulateur de force (16, 16a) ni au boîtier (12, 12a).

15. Embrayage à friction, comprenant un module de plaque de pression (10 ; 10a) selon l'une quelconque des revendications précédentes.
